(19) Europäisches Patentamt
European Patent Office
Office européen des brevets

(11) **EP 4 491 446 A1**

(12) **EUROPEAN PATENT APPLICATION**
published in accordance with Art. 153(4) EPC

(43) Date of publication:
**15.01.2025  Bulletin 2025/03**

(21) Application number: 22930725.1

(22) Date of filing: 07.03.2022

(51) International Patent Classification (IPC):
**B60L 58/12** (2019.01)

(52) Cooperative Patent Classification (CPC):
**B60L 58/12**

(86) International application number:
**PCT/JP2022/009712**

(87) International publication number:
**WO 2023/170739 (14.09.2023 Gazette 2023/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: Hitachi Astemo, Ltd.
Ibaraki 312-8503 (JP)

(72) Inventors:
• OSAKI Junichi
Hitachinaka-shi, Ibaraki 312-8503 (JP)
• OKUDA Yuki
Hitachinaka-shi, Ibaraki 312-8503 (JP)

(74) Representative: MERH-IP Matias Erny Reichl
Hoffmann
Patentanwälte PartG mbB
Paul-Heyse-Straße 29
80336 München (DE)

(54) **SOC PREDICTION SYSTEM**

(57)      Provided is an SOC prediction system 200 that is an energy consumption prediction device for appropriately correcting an energy consumption prediction parameter and enabling an accurate travel plan to be implemented in an SOC prediction system that predicts a battery state at a future passage spot of an own vehicle by using the energy consumption prediction parameter acquired online or offline. The SOC prediction system 200 includes: a state of charge prediction result calculation unit 300 that calculates the energy consumption based on an energy consumption prediction parameter and predicts the future state of charge of the battery of the own vehicle; and an SOC prediction result correction unit 310 that compares a state of charge prediction result output from the state of charge prediction result calculation unit 300 with a state of charge actual measurement result of the battery measured after actual travel by the own vehicle, calculates an error, corrects the state of charge prediction result based on the error, and outputs a corrected result as an SOC prediction result.

*FIG. 3*

EP 4 491 446 A1

**Description**

Technical Field

The present invention relates to an SOC (state of charge) prediction system that predicts a battery state of a vehicle driven by a motor at a future passage spot.

Background Art

In recent years, vehicles driven by a motor instead of the power of an engine, such as hybrid vehicles and electric vehicles, have been developed from the viewpoint of environmental protection.

Although a motor is driven by a battery mounted on a vehicle, in order to efficiently use charged energy without waste, a mechanism has been studied for preparing a charging plan and a traveling plan using altitude difference information on a route set in advance by a navigation system, a traveling situation of another vehicle acquired via a network, and the like, whereby a battery level is managed.

In order to accurately implement the above-described mechanism, it is necessary to improve the accuracy of prediction of a battery state at a future passage spot, and an invention related to a battery state prediction technique has been made.

In PTL 1, in the electricity cost prediction for each traveling route section, the actual electricity cost value of the other vehicles in the prediction target section is acquired from a database on a network, and the electricity cost prediction of an own vehicle is corrected to improve the electricity cost prediction accuracy.

In addition, PTL 2 discloses an invention of a technique for storing, in a database, a speed at which other vehicles are traveling on a route in electricity cost prediction for each travel route section, and correcting the electricity cost prediction of an own vehicle on the basis of averaged speed information.

Citation List

Patent Literature

PTL 1: JP 2019-086430 A

PTL 2: JP 2015-214294 A

Summary of Invention

Technical Problem

However, in the technique disclosed in PTL 1, for example, there is a possibility that the database of the actual electricity cost value is not enriched in a route with a small traffic volume or an area with a poor communication condition, and it is expected that it is difficult to improve the accuracy of the electricity cost prediction in a route with little information in the database.

In addition, in the technique disclosed in PTL 2, while the database is enriched using data acquired from various vehicles, the averaged information is not necessarily consistent with the current vehicle situation in which the electricity cost prediction is performed, and there is a possibility that the electricity cost prediction and the actual result are different.

Furthermore, in the above-described PTL 1 and PTL 2, it is assumed that information is acquired from a network, but parameters for electricity cost prediction is not necessarily acquired from the network, and may also be acquired offline.

When electricity cost prediction is performed either online or offline, a deviation in energy balance occurs to a considerable extent due to a warm-up state of a vehicle, driving characteristics of a driver, a variation in road surface resistance due to air pressure of a tire, a variation in traveling resistance due to traveling wind, and battery deterioration.

The present invention has been made in view of such a problem, and the object is to provide an SOC prediction system that is an energy consumption prediction device for appropriately correcting an energy consumption prediction parameter and enabling an accurate travel plan to be implemented in an SOC prediction system that predicts a battery state at a future passage spot of an own vehicle by using the energy consumption prediction parameter acquired online or offline.

Solution to Problem

In order to achieve the above object, the present invention is configured as follows.

An SOC prediction system that predicts energy consumption required for traveling and predicts a future state of charge of a battery of an own vehicle, includes: a state of charge prediction result calculation unit that calculates the energy consumption based on an energy consumption prediction parameter and predicts the future state of charge of the battery of the own vehicle; and an SOC prediction result correction unit that compares a state of charge prediction result output from the state of charge prediction result calculation unit with a state of charge actual measurement result of the battery measured after actual travel by the own vehicle, calculates an error, corrects the state of charge prediction result based on the error, and outputs a corrected result as an SOC prediction result.

Advantageous Effects of Invention

According to the present invention, it is possible to provide an SOC prediction system capable of improving the accuracy of the energy consumption estimation result by looking back on whether the prediction was correct after traveling in a certain section with respect to the energy consumption prediction value obtained by comparing the past own vehicle situation and the energy consumption estimation parameter, and further correcting the prediction result with the correction value calculated on the basis of the deviation when there is a deviation between the prediction and the actual value.

In addition, it is possible to provide an SOC prediction system capable of performing an accurate planned operation by improving the accuracy of the energy consumption estimation result.

Brief Description of Drawings

[FIG. 1] FIG. 1 is an operation explanatory diagram of scheduled engine control using SOC prediction control of an SOC prediction system of the present invention.

[FIG. 2] FIG. 2 is a system configuration diagram illustrating an embodiment in a case where an SOC prediction system to which the present invention is applied is applied to a control device mounted on a vehicle.

[FIG. 3] FIG. 3 is a block diagram illustrating a configuration of an embodiment of the present invention.

[FIG. 4] FIG. 4 is a table showing an example of an SOC prediction result and a correction method according to the embodiment of the present invention.

[FIG. 5] FIG. 5 is a table showing an example of an SOC prediction result and a correction method according to the embodiment of the present invention.

[FIG. 6] FIG. 6 is a table showing an example of an SOC prediction result and a correction method according to the embodiment of the present invention.

[FIG. 7] FIG. 7 is a table showing an example of an SOC prediction result and a correction method according to the embodiment of the present invention.

[FIG. 8] FIG. 8 is a table showing an example of an SOC prediction result and a correction method according to the embodiment of the present invention.

[FIG. 9] FIG. 9 is a table showing another example of an SOC prediction result and a correction method according to the embodiment of the present invention.

[FIG. 10] FIG. 10 is a table showing another example of an SOC prediction result and a correction method according to the embodiment of the present invention.

[FIG. 11] FIG. 11 is a table showing another example of an SOC prediction result and a correction method according to the embodiment of the present invention.

[FIG. 12] FIG. 12 is a table showing another example of an SOC prediction result and a correction method according to the embodiment of the present invention.

[FIG. 13] FIG. 13 is a table showing another example of an SOC prediction result and a correction method according to the embodiment of the present invention.

[FIG. 14] FIG. 14 is a table showing yet another example of an SOC prediction result and a correction method according to the embodiment of the present invention.

[FIG. 15] FIG. 15 is a table showing yet another example of an SOC prediction result and a correction method according to the embodiment of the present invention.

[FIG. 16] FIG. 16 is a table showing yet another example of an SOC prediction result and a correction method according to the embodiment of the present invention.

[FIG. 17] FIG. 17 is a table showing yet another example of an SOC prediction result and a correction method according to the embodiment of the present invention.

[FIG. 18] FIG. 18 is a table showing yet another example of an SOC prediction result and a correction method according to the embodiment of the present invention.

[FIG. 19] FIG. 19 is a flowchart illustrating processing of an SOC prediction result correction unit according to the embodiment of the present invention.

Description of Embodiments

Hereinafter, an embodiment of an SOC prediction system according to the present invention will be described in detail with reference to the drawings. Although an application example to a vehicle is specifically illustrated in the drawings, the drawings are for illustrating the basic principle of the present invention, and the scope of the present invention is not limited to the scope illustrated in the drawings.

The present invention is directed to a vehicle that is motor-driven by electric power stored in a battery, such as a hybrid vehicle or an electric vehicle. The hybrid vehicles are classified into series hybrid vehicles, parallel hybrid vehicles, and the like, but the difference in the roles of the internal combustion engine and the motor is not particularly limited.

In a hybrid vehicle, efficient use of a battery extends a cruising distance, which is advantageous in terms of fuel efficiency and electricity cost.

Fuel saving driving can be realized by making a plan of driving by the engine and power generation by the engine for a section defined by navigation or the like, and making a schedule of where to start the engine and where to regenerate.

Embodiments

(First Embodiment)

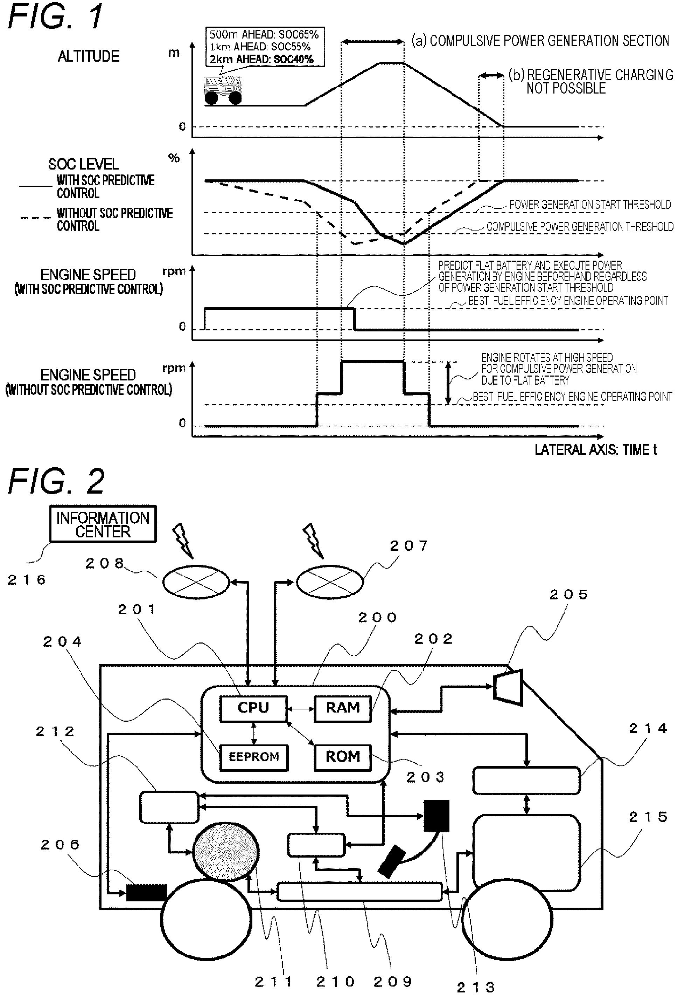

An effect of scheduling of a power generation plan of an engine which is an internal combustion engine will be described with reference to FIG. 1.

FIG. 1 is an operation explanatory diagram of scheduled engine control using SOC prediction control of an SOC prediction system of the present invention.

For example, in a case where, when a vehicle is traveling, an in-vehicle battery is low in charge before reaching an uphill, electric power for motor driving becomes insufficient when the vehicle reaches the uphill, and the vehicle travels on the uphill by excessively rotating an engine in a compulsive power generation section illustrated in (a) of FIG. 1, thereby deteriorating fuel efficiency.

In addition, when the in-vehicle battery is fully charged while traveling on a downhill road, a regenerative charging impossible section illustrated in (b) of FIG. 1 occurs, and energy obtained by regeneration is not stored in the battery and needs to be discarded.

As described above, in the hybrid vehicle, an energy loss occurs when traveling by the engine or switching between power generation and motor driving is unplanned.

Therefore, SOC (state of charge) prediction control is performed to estimate an SOC level at a future passage spot, and control is performed by calculating a charge start timing and a charge period of the engine.

During engine charging, the engine control is performed such that the fuel efficiency is optimized, and when the charge by the regeneration is expected, the SOC level is controlled such that the SOC level is decreased in advance, thereby minimizing the engine charging and contributing to improvement of the fuel efficiency.

However, even if the schedule of engine charging is set by the SOC prediction control as described above, depending on an actual road situation or a vehicle situation, the schedule may not be respected, and for example, it is also assumed that the battery becomes flat earlier than the scheduled battery level, and it is necessary to charge the battery by the engine.

Therefore, it is necessary to accurately predict the SOC level in order to accurately schedule start of the engine in the hybrid vehicle.

FIG. 2 is one of embodiments in a case where an SOC prediction system 200 according to the present invention is applied to a control device mounted on the vehicle.

In FIG. 2, the SOC prediction system 200 includes a microcomputer 201 (CPU), a RAM (Random Access Memory) 202, a ROM (Read Only Memory) 203, and a non-volatile ROM 204 (EEPROM) .

The SOC prediction system 200 receives information from the network receiver 208 that receives various information from an information center 216, such as: external information obtained on the basis of information from a camera sensor 205 attached to the vehicle; vehicle speed information of the own vehicle acquired from a vehicle speed sensor 206; position information acquired from a GPS sensor 207; and time information, congestion information, and weather information from the external network.

In order to acquire the current SOC state, the SOC prediction system 200 communicates with a battery control unit 210 connected to a battery 209.

The battery 209 stores electric power for driving a motor 211. The motor 211 is connected to a motor control unit 212, and the motor control unit 212 calculates a driving force according to a driver's acceleration request through an accelerator pedal sensor 213, and is controlled on the basis of the command.

According to the SOC prediction result calculated by the SOC prediction system 200, the SOC prediction system 200 plans the engine charging start timing and the schedule of the charging section, and transmits an instruction to start or stop charging according to the plan to an engine control module 214.

The engine control module 214 controls an engine 215 on the basis of commands to start and stop charging, and starts and stops the engine. The electric power generated by the engine 215 is sent to the battery 209 to charge.

Here, in order to describe the configuration of the present invention in a comprehensive manner, the arrangement of the functions of the sensor and each control module is defined, but the attachment of each sensor and the arrangement of the control module to communicate may be changed. Further, the SOC prediction system 200 of the present invention may be integrated into one function of the battery control unit 210 or another control module.

Since the system configuration of the vehicle as described above is well known, further description will be omitted.

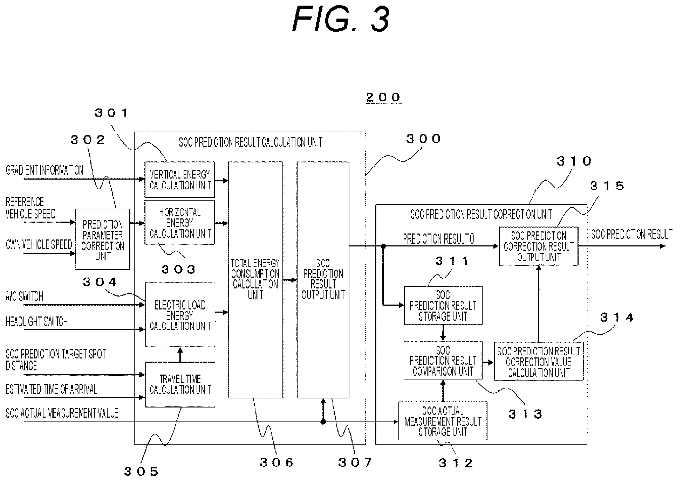

FIG. 3 is a block diagram of the SOC prediction system 200 of the present invention illustrated in FIG. 2.

Basically, the energy consumption of the vehicle is obtained by the sum of equations of gradient resistance, air resistance, rolling resistance, and acceleration resistance. The SOC prediction result calculation unit 300 obtains the SOC by subtracting the energy consumption obtained by the above-described calculation equation of the travel resistance from the SOC level.

In a case where the charging of the engine in the midway is also included in the plan, the SOC prediction result considering the charging can be output by adding the charging energy that increases in the engine start section in consideration of the power calculation per unit time varying depending on the engine speed and the charging rate; however, the description thereof is omitted herein.

Each travel resistance calculated by the SOC prediction result calculation unit 300 will be described.

The gradient information at the future passage spot is input to a vertical energy calculation unit 301.

The gradient information includes a plurality of pieces of gradient information between paths respectively connecting adjacent points being set at arbitrary regular intervals on the future passage route. Vertical energy can be obtained by applying the gradient information between the paths to the following equation (3.1) of the gradient resistance.

$$\text{Gradient resistance} = \text{total vehicle weight} \times \text{gravitational acceleration} \times \sin\theta \qquad (3.1)$$

Next, a horizontal energy calculation unit 303 obtains horizontal energy.

In order to calculate the horizontal energy, it is necessary to have an expectation of at what speed the vehicle will travel at the above-described future passage spot or the route thereof.

For example, when the speed expectation at the future passage spot is made, application of a speed limit acquired from the navigation information or the camera information is conceivable. However, the speed limit and the speed expectation do not necessarily coincide with each other depending on the driving manner and the road situation.

Therefore, the speed limit is not directly applied to the speed expectation, and a prediction parameter correction unit 302 sets the speed limit as the reference vehicle speed, compares the reference vehicle speed with the own vehicle speed, and calculates the speed expectation of about what speed the own vehicle travels at the future passage spot.

The speed expectation calculated by the prediction parameter correction unit 302 is input to the horizontal energy calculation unit 303, and the speed expectation is assigned to the traveling speed in the following equation (3.2) of the air resistance. In addition, energy corresponding to the rolling resistance is also calculated by equation (3.3) to obtain horizontal energy.

$$\text{Air resistance} = (1/2) \times \text{Cd value} \times \text{air density} \times \text{frontal projected area} \times \text{traveling speed} \qquad (3.2)$$

$$\text{Rolling resistance} = \text{rolling resistance coefficient} \times \text{total vehicle weight} \times \text{gravitational acceleration} \qquad (3.3)$$

Vertical energy and horizontal energy act dominantly on energy consumption, but energy consumption or acceleration/deceleration energy consumption due to other electric loads generates an error between the SOC prediction result and the actual performance.

Therefore, an electric load energy calculation unit 304 calculates energy consumption other than energy related to traveling. Electric load states including an air conditioner use situation, an A/C switch state, a headlight switch state, and the like are input to the electric load energy calculation unit 304, to calculate how many Joules of energy are consumed per unit time depending on the electric load states. The electric load is multiplied by the time calculated by the travel time calculation unit 305 from the SOC prediction target spot distance and the estimated time of arrival to calculate the electric load energy consumption.

The gradient information, the reference vehicle speed, the own vehicle speed, the A/C switch state, the headlight switch state, the SOC prediction target spot distance, and the estimated time of arrival are energy consumption prediction parameters.

The total energy consumption calculation unit 306 calculates the total energy consumption by summing the vertical energy, the horizontal energy, and the electric load energy. The SOC prediction result output unit 307 outputs the SOC prediction result by subtracting the percentage of the SOC corresponding to the energy consumption for each route between the future passage spots obtained as described above from the current SOC.

In general, although the SOC can be predicted to some extent by the calculation so far, parameters such as road surface resistance for obtaining energy in the horizontal direction change at each spot.

In addition, the inclination of the increase/decrease of the SOC also changes depending on the acceleration/-deceleration energy and the battery deterioration state, an error occurs between the SOC prediction result and the actual result, and it is difficult to accurately perform the scheduled engine control of the hybrid vehicle.

The present invention is configured to further store the SOC prediction result, compare the SOC prediction result with the actual SOC, calculate the correction value from divergence between the prediction and the actual SOC, and further correct the SOC prediction result that is the output of the SOC prediction result output unit 307, thereby enabling improvement in accuracy.

The SOC prediction result correction unit 310 corrects the prediction result of the SOC prediction result output unit 307.

The SOC prediction result storage unit 311 stores the SOC prediction result between the future passage spots output from the SOC prediction result output unit 307. The actual measurement value of the SOC is stored in the SOC actual measurement result storage unit 312. The SOC prediction result comparison unit 313 compares the results stored in the SOC prediction result storage unit 311 and the SOC actual measurement result storage unit 312 after a lapse of an arbitrary time or after traveling a predetermined distance. The SOC prediction result comparison unit 313 compares the SOC actual measurement value at the current spot or the past SOC actual measurement value with the SOC prediction result to be compared, to calculate an error.

The SOC prediction result correction value calculation unit 314 calculates an SOC prediction result correction value from the error calculated by the SOC prediction result comparison unit 313.

The SOC prediction correction result output unit 315 corrects the SOC prediction result calculated from the expectation of the energy consumption calculated by the vertical energy, the horizontal energy, and the electrical load energy calculated by the SOC prediction result calculation unit 300 by using the SOC prediction result correction value calculated by comparing the SOC prediction result and the SOC actual measurement result.

In this way, in a case where the SOC prediction result that is the basis of the correction calculated by solving the energy consumption necessary for the future passage spot is corrected with the correction value calculated from the stored past prediction result and the actual SOC, the error caused by the vehicle state and the error with respect to the characteristic of the driver, which are not included in the output of the SOC prediction result calculation unit 300, are corrected by the SOC prediction result correction unit 310.

For example, the rolling resistance of the above equation (3.3) varies depending on the road surface condition and also varies depending on the condition of the tires of the vehicle.

In addition, although the vehicle weight is included in the calculation equations for calculating the horizontal energy and the vertical direction energy, the vehicle weight is different between the case of one occupant and the case of five occupants.

The result of equation (3.2) of the air resistance also varies depending on the wind direction, the wind speed, and the atmospheric pressure.

Even when the same energy is consumed, the SOC level is different between the case of a new battery and the case of a deteriorated battery.

In addition, depending on the driver, for example, an error in acceleration/deceleration energy caused by a difference in acceleration at the time of acceleration or a difference in how to apply the brake also differs between drivers.

The error caused by the road surface resistance, the difference in the number of passengers, the battery deterioration state, the driver characteristic, and the like as described in the above example is included in the error component calculated by the SOC prediction result comparison unit 313, and the accuracy of the SOC prediction result is improved by correcting these.

According to the method for correcting the SOC prediction result according to the first embodiment of the present invention, the SOC prediction accuracy is improved, and the SOC prediction accuracy can be accurately controlled on the basis of the scheduled engine charging start timing and charging period of the hybrid vehicle.

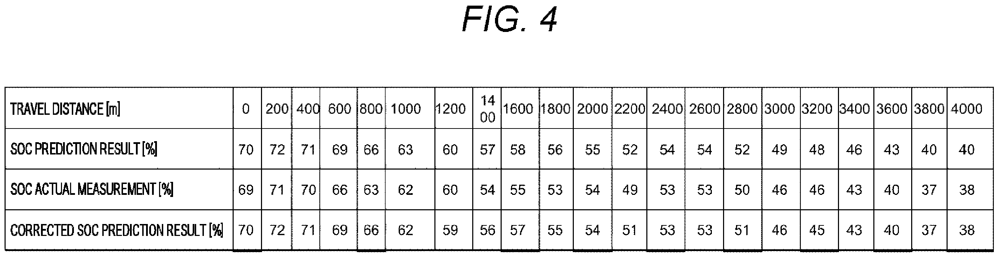

FIGS. 4 to 8 illustrate changes in the prediction result according to the present invention when correction is performed on the SOC prediction result.

The SOC prediction result comparison unit 313 of the SOC prediction result correction unit 310 compares the state of charge prediction result with the state of charge actual measurement result at one of a timing after a lapse of a predetermined time (30 seconds or 1 minute) from a time at which the future state of charge of the battery 209 is predicted by the state of charge prediction result calculation unit 300 and a timing after traveling of a predetermined distance from a spot at which the future state of charge of the battery is predicted 209.

The examples illustrated in FIGS. 4 to 8 are examples in which the state of charge prediction result and the state of charge actual measurement result are compared at a timing after a predetermined time elapses from the time of the prediction.

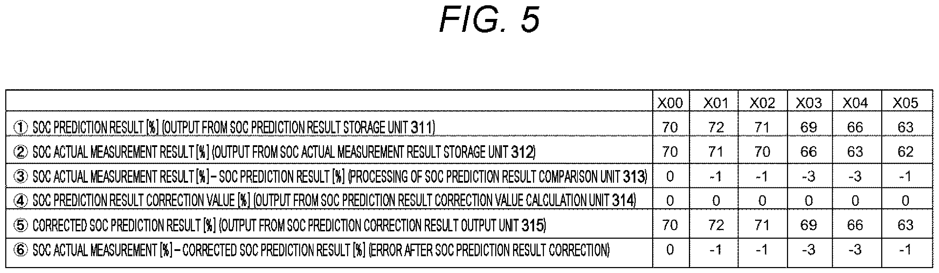

FIG. 4 illustrates a case in which, every 1000 m, the SOC at every 200 m is predicted up to 1000 m ahead in a situation of traveling a distance of 4000 m, and FIGS. 5 to 8 illustrate a case in which the SOC prediction result correction value is calculated by comparing the SOC prediction result made 1000 m behind with the actual SOC, and the SOC prediction result is corrected.

<Step at spot X00>

First, at X00, SOC prediction results for X01 to X05 are calculated.

This prediction result is stored in the SOC prediction result storage unit 311 in FIG. 3.

<Step at spot X05>

As illustrated in FIG. 5, upon arrival at the spot X05, the SOC prediction result for the spot X05 stored in the SOC prediction result storage unit 311 at the spot X00 is compared with the SOC actual measurement result at the spot X05.

At the spot X05, since the SOC prediction result stored in the SOC prediction result storage unit 311 is 63% and the SOC actual measurement result stored in the SOC actual measurement result storage unit 312 is 62%, the error calculated by the SOC prediction result comparison unit 313 is -1%.

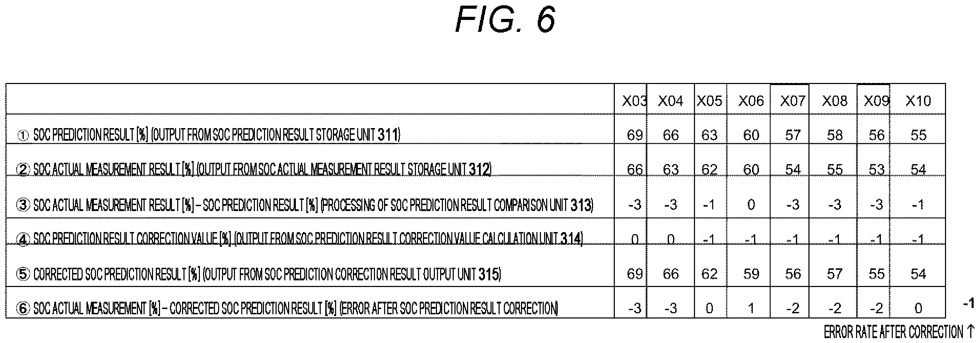

Next, as illustrated in FIG. 6, the SOC prediction up to 1000 m ahead is performed again at the spot X05.

At the spot X05, the SOC at the spots X06 to X10 are predicted to be 60%, 57%, 58%, 56%, and 55%, respectively. These values are stored in the SOC prediction result storage unit 311.

The SOC prediction result correction value calculation unit 314 obtains a correction value from the error calculated by the SOC prediction result comparison unit 313.

In the examples shown in FIGS. 6 to 8, the correction is performed by a method of offsetting the error, and the error calculated by the SOC prediction result comparison unit 313 is directly added to the SOC prediction result to perform the correction.

The corrected SOC prediction results for X06 to X10 are 59%, 56%, 57%, 55%, and 54%, respectively, reflecting the error of -1% calculated by the SOC prediction result comparison unit 313. The corrected SOC prediction results are used for scheduling of engine control of the hybrid vehicle.

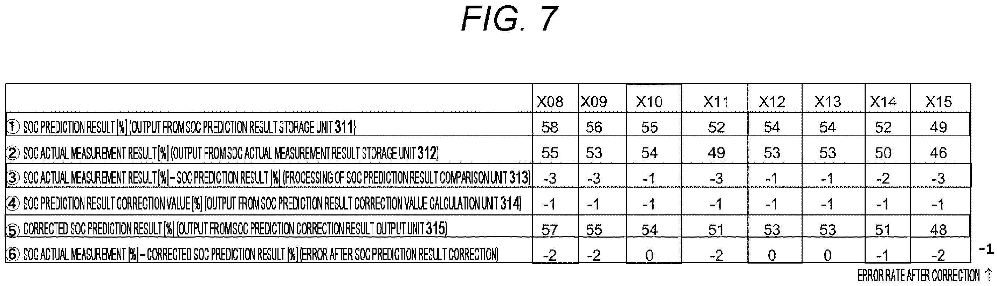

<Step at spot X10 in FIG. 7>

Similarly to the step at the spot X05, upon arrival at the spot X10, the SOC prediction result for the spot X10 stored in the SOC prediction result storage unit 311 at the spot X05 is compared with the SOC actual measurement result at the spot X10.

At the spot X10, since the SOC prediction result is 55% and the SOC actual measurement result is 54%, the error calculated by the SOC prediction result comparison unit 313 is -1%.

Since the prediction step and the correction step to be executed hereafter are similar to those at X05, the description thereof is omitted.

As a result of performing the SOC prediction up to 1000 m ahead again at the spot X10, the SOC at the spot X15 is predicted to be 49%, and this value is stored in the SOC prediction result storage unit 311.

The corrected SOC prediction results for X11 to X15 are 51%, 53%, 53%, 51%, and 48%, respectively, reflecting the aforementioned error of -1%.

The corrected SOC prediction results are used for scheduling of engine control of the hybrid vehicle.

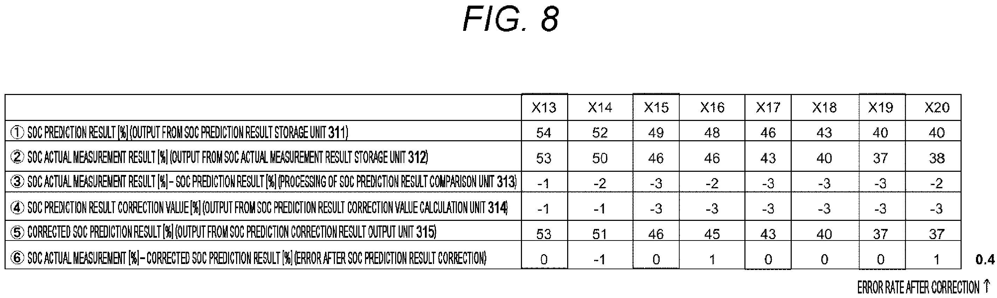

<Step at spot X15 in FIG. 8>

Similarly to the step at the spot X10, upon arrival at the spot X15, the SOC prediction result for the spot X15 stored in the SOC prediction result storage unit 311 at the spot X10 is compared with the SOC actual measurement result at the spot X15.

At the spot X15, since the SOC prediction result is 49% and the SOC actual measurement result is 46%, the error calculated by the SOC prediction result comparison unit 313 is -3%.

Since the prediction step and the correction step to be executed hereafter are similar to those at X10, the description thereof is omitted.

As a result of performing the SOC prediction up to 1000 m ahead again at the spot X15, the SOC at the spot X20 is predicted to be 40%, and this value is stored in the SOC prediction result storage unit 311.

The corrected SOC prediction results for X16 to X20 are 45%, 43%, 40%, 37%, and 37%, respectively, reflecting the aforementioned error of -3%.

The corrected SOC prediction results are used for scheduling of engine control of the hybrid vehicle.

By sequentially and repeatedly performing the above steps, calculated by the SOC prediction result calculation unit 300 in FIG. 3 are corrected by the SOC prediction result correction unit 310, whereby the SOC prediction accuracy can be improved.

In the present invention, the timing at which the comparison of the SOC prediction result with the actual SOC is performed can be any timing after the SOC prediction is performed, and can be changed according to the situation.

The SOC prediction result and the SOC prediction result correction value are recalculated and performed every 1000 m in the above embodiment, but may also be recalculated every 200 m.

Alternatively, this may be performed at periodic time intervals, for example, every 1s.

For example, the SOC prediction error significantly increases when the number of passengers changes, that is, when the total vehicle weight significantly changes, when the driver characteristic changes due to a change of the driver, or the like. In a case where the error is large, the frequency of correcting the predicted SOC is increased to converge the error quickly, and in a case where the error is determined to have converged, the frequency of correcting the SOC is decreased to prevent the SOC prediction result from being updated more than necessary.

In addition, in the present invention, a spot where the past SOC prediction result is compared with the actual SOC may be one spot where the past prediction was performed, or any several spots.

For example, when an arbitrary spot is selected, the SOC predicted for the current spot at the spot where the previous prediction was performed is compared with the actual SOC at the current spot. Since the correction is performed on the basis of the error between the latest prediction and the actual result, the latest information is always reflected in the correction with respect to the SOC prediction result, and it is possible to improve the SOC prediction accuracy by absorbing the SOC error generated by the situation changing from moment to moment such as the road surface situation and the driving situation.

When a plurality of arbitrary spots are selected, the SOC prediction result correction value is calculated by comparing the SOC prediction results at the plurality of spots stored in the SOC prediction result storage unit 311 at the time of the previous SOC prediction result calculation with the SOC actual measurement results at the plurality of spots stored in the SOC actual measurement result storage unit 312.

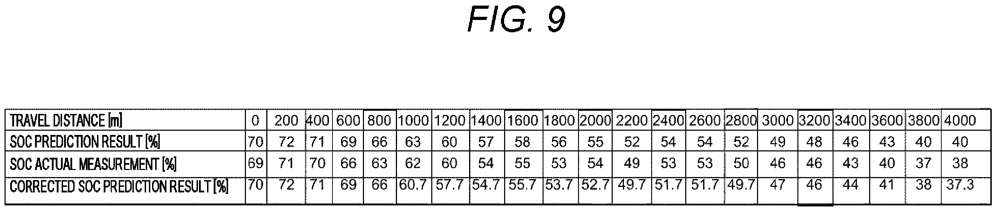

In the example illustrated in FIGS. 9 to 13, during calculation of the correction value for correction of the SOC prediction results for the subsequent spots X06 to X10 at the spot X05, the SOC prediction results for the spots X03 to X05 are compared with the SOC actual measurement results.

In the example illustrated in FIGS. 9 to 13, a spot where the state of charge prediction result and the state of charge actual measurement result are to be compared is a spot after traveling of the predetermined distance and a plurality of spots before traveling of the predetermined distance, the SOC prediction result comparison unit 313 calculates a plurality of errors by comparing the state of charge prediction results at the spot after traveling of the predetermined distance and the plurality of spots before traveling of the predetermined distance with the state of charge actual measurement results at the spot after traveling of the predetermined distance and the plurality of spots before traveling of the predetermined distance, and the SOC prediction result correction value calculation unit 314 calculates an average value of the plurality of errors calculated by the SOC prediction result comparison unit 313, and calculates a correction value of the state of charge prediction result based on the calculated average value.

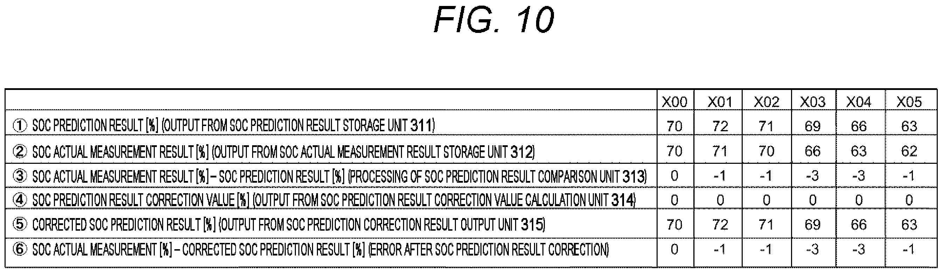

<Step at spot X05 in FIG. 10>

Upon arrival at the spot X05, the SOC prediction results for the spots X03 to X05 stored in the SOC prediction result storage unit 311 at the spot X00 is compared with the SOC actual measurement results at the spots X03 to X05.

At the spot X03 in FIG. 10, since the SOC prediction result is 69% and the SOC actual measurement result is 66%, the error is -3%.

At the spot X04 in FIG. 10, since the SOC prediction result is 66% and the SOC actual measurement result is 63%, the error is -3%.

At the spot X05 in FIG. 10, since the SOC prediction result is 63% and the SOC actual measurement result is 62%, the error is -1%.

The average value of the errors at the spots X03 to X05 obtained by the SOC prediction result correction value calculation unit 314 is -2.3% ((-3 - 3 - 1)/3 ≈ -2.3), which is used as the correction value to correct the SOC prediction results for the subsequent sections X06 to X10.

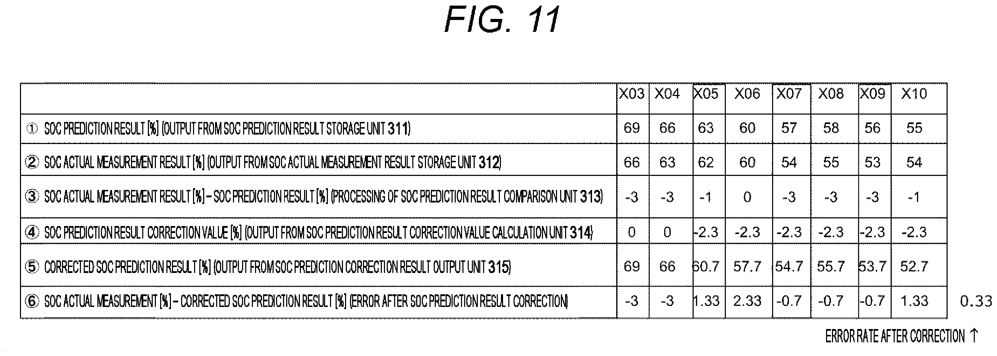

As shown in FIG. 11, at the spot X05, the SOC at the spots X06 to X10 are predicted to be 60%, 57%, 58%, 56%, and 55%, respectively. These values are stored in the SOC prediction result storage unit 311.

On the other hand, when the obtained SOC prediction result correction value, which is -2.3%, is added to the SOC prediction result, as shown in FIG. 11, the corrected SOC prediction results for the spots X06 to X10 are 57.7%, 54.7%, 55.7%, 53.7%, and 52.7%, respectively.

The corrected SOC prediction results are used for scheduling of engine control of the hybrid vehicle.

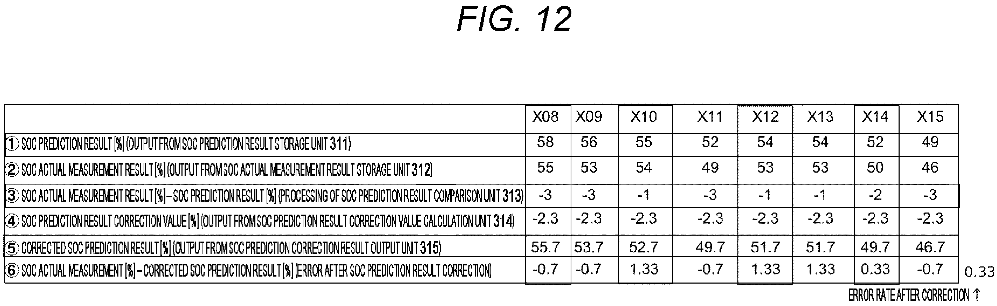

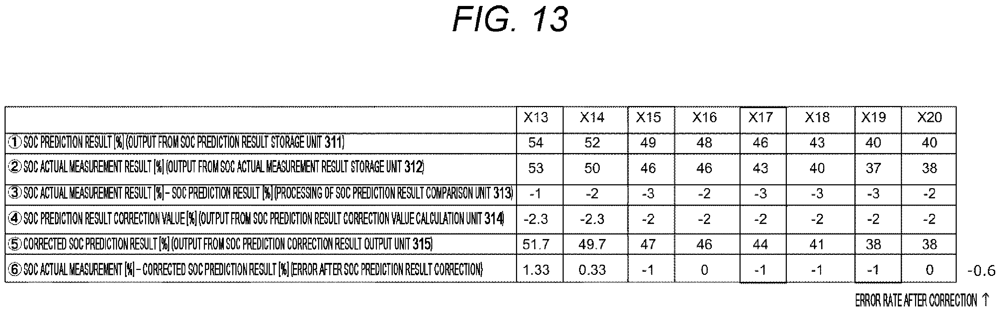

FIG. 12 shows the prediction for the spots X11 to X15 upon arrival at the spot X10, and FIG. 13 shows the prediction for the spots X16 to X20 upon arrival at the spot X15.

By comparing the SOC prediction results for the plurality of spots with the actual SOC, the errors are averaged and the prediction results are not excessively corrected. For example, it is possible to improve the SOC prediction accuracy by absorbing the SOC error generated by energy consumption such as an electric load other than energy consumed by motor driving.

In the present invention, the weight of the correction value calculated from the error between the SOC prediction result and the actual SOC is changed according to the distance to the future passage spot which is the SOC prediction target.

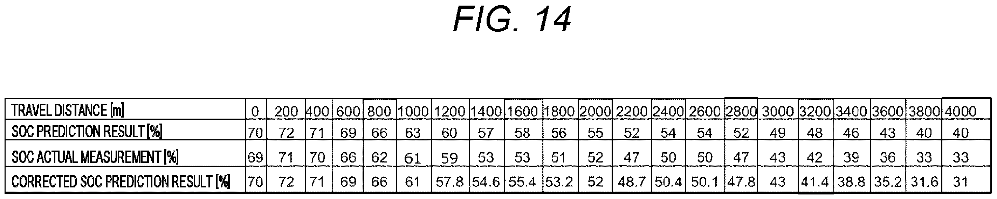

With reference to FIGS. 14 to 18, an example will be described in which, upon calculation of the correction value for correction of the SOC prediction results for the subsequent spots X06 to X10 at the spot X05, upon correction of the SOC prediction results for the subsequent spots X11 to X15 at the spot X10, and upon calculation of the correction value for correction of the SOC prediction results for the subsequent spots X16 to X20 at the spot X15, the value of the SOC prediction result correction value is increased as the prediction target spot is farther.

In other words, the example shown in FIGS. 14 to 18, the SOC prediction result comparison unit 313 calculates an error by comparing the state of charge prediction result at the spot after traveling of the predetermined distance with the state of charge actual measurement result at the spot after traveling of the predetermined distance, and the SOC prediction result correction value calculation unit 314 calculates the correction value of the state of charge prediction result by weighting the error calculated by the SOC prediction result comparison unit 313 such that a correction amount increases as the distance from the spot after traveling of the predetermined distance increases. However, a configuration is also possible in which the correction value for the state of charge prediction result is calculated by assigning a weight that increases the correction amount as the time elapses from the spot after traveling the predetermined distance.

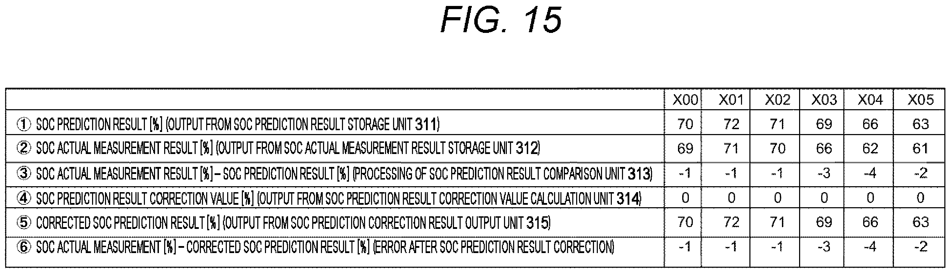

<Step at spot X05 in FIG. 15>

Upon arrival at the spot X05, the SOC prediction results for the spot X05 stored in the SOC prediction result storage unit 311 at the spot X00 is compared with the SOC actual measurement results at the spot X05.

At the spot X05, since the SOC prediction result is 63% and the SOC actual measurement result is 61%, the error calculated by the SOC prediction result comparison unit 313 is -2%.

Next, the SOC prediction up to 1000 m ahead is performed again at the spot X05.

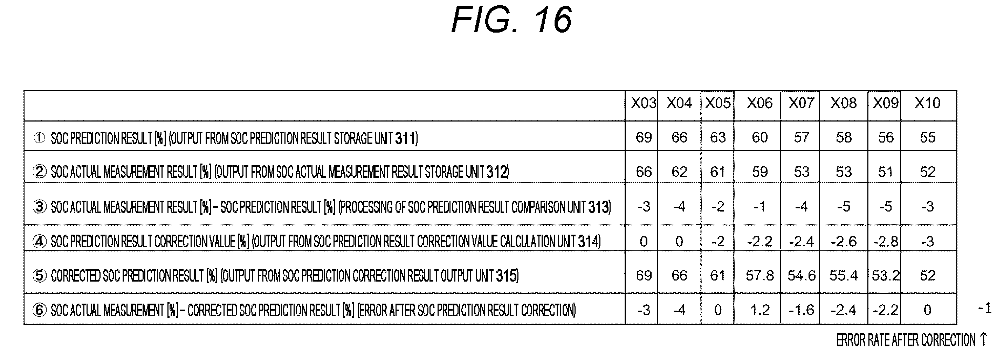

In FIG. 16, at the spot X05, the SOC at the spots X06 to X10 are predicted to be 60%, 57%, 58%, 56%, and 55%, respectively. These values are stored in the SOC prediction result storage unit 311.

The SOC prediction result correction value calculation unit 314 obtains a correction value from the error calculated by the SOC prediction result comparison unit 313.

In the example of FIG. 16, the correction is performed by the method of offsetting the error, but the weight is changed such that the ratio of the error calculated by the SOC prediction result comparison unit 313 becomes larger with increasing distance from the current spot X05.

The SOC prediction result correction values for the spots X06 to X10 are calculated as -2.2% (-2 + (-2/10) = - 2.2), -2.4% (-2.2 + (-2/10) = -2.4), -2.6% (-2.4 + (-2/10) =-2. 6), -2.8% (-2.6 + (-2/10) = -2.8), and -3% (-2.8 + (-2/10) = -3.0), respectively for X06 to X10.

When the SOC prediction result is corrected using this correction value, the SOC prediction result becomes 57.8%, 54.6%, 55.4%, 53.2%, and 52%, respectively.

The corrected SOC prediction results are used for scheduling of engine control of the hybrid vehicle.

This correction is effective, for example, when SOC prediction is performed in a vehicle in which battery deterioration progresses.

When the battery deteriorates, the reduction amount of the SOC is expected to be larger even with the same energy consumption than when the battery is new. Since the error correction amount increases as the distance to the SOC prediction target spot increases, the correction amount of the SOC prediction target spot closer to the current spot is smaller, and the correction amount of the SOC prediction target spot farther from the current spot is greater.

In this way, it is possible to improve the SOC prediction accuracy by calculating and correcting the energy consumption prediction correction value suitable for the actual state with respect to the error between the SOC prediction result caused by the battery deterioration and the actual value.

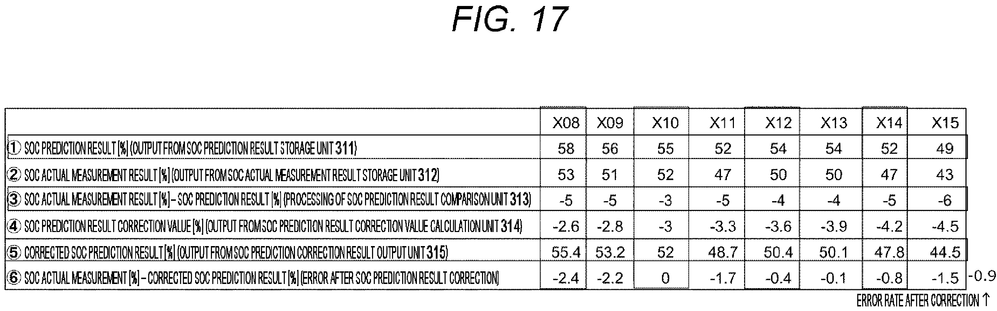

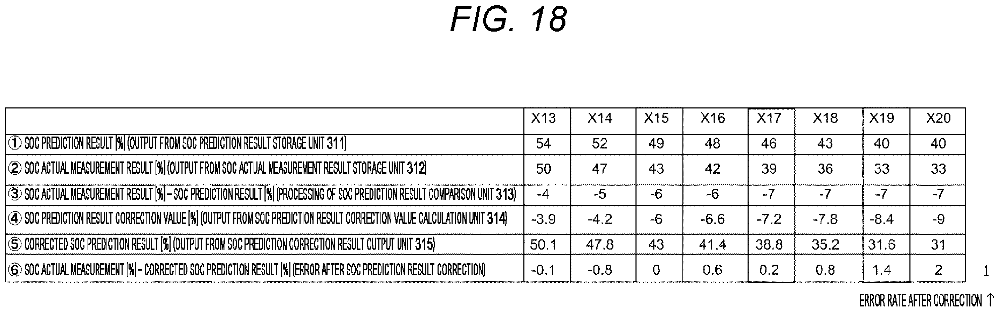

FIG. 17 shows the prediction for the spots X11 to X15 upon arrival at the spot X10, and FIG. 18 shows the prediction for the spots X16 to X20 upon arrival at the spot X15.

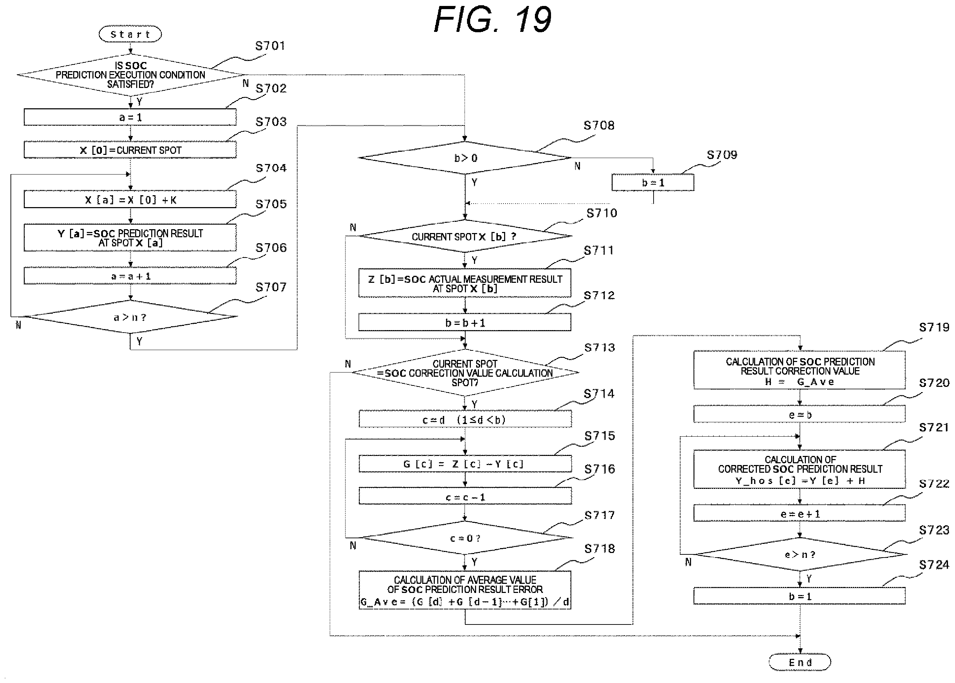

FIG. 19 is a flowchart showing a flow of a control step related to the SOC prediction result correction unit 310 in the SOC prediction system 200 illustrated in FIG. 3.

A program for executing this flowchart is processed by the CPU 201 of the SOC prediction system 200, and is periodically executed at a predetermined activation timing (for example, every 1s).

Further, the SOC prediction system 200 includes a function for updating the own vehicle position information by comparing the coordinate of the own vehicle position received by the GPS sensor 207 with map information written in advance in the ROM 203.

In addition, this flowchart shows an example of a method of comparing the plurality of SOC prediction results with the SOC actual measurement results illustrated in FIGS. 9 to 13, calculating the average of the SOC prediction errors, and offsetting the SOC prediction result at the future prediction target spot by the average value of the prediction errors.

Hereinafter, each step of this flowchart will be described in detail.

«Step S701»

It is confirmed whether an SOC prediction execution condition is satisfied.

The SOC prediction execution condition is satisfied when the own vehicle position reaches a predetermined spot or when a predetermined time has elapsed since the previous execution of the SOC prediction.

When the condition is satisfied, the process proceeds to step S702 to execute the calculation of the SOC prediction result calculation unit 300.

When the condition is not satisfied, the calculation by the SOC prediction result calculation unit 300 is skipped, and the process proceeds to step S708.

<<Step S702>>

A variable a in step S702 means a sequence number for storing a prediction result.

In step S702, the number of the sequence for storing the prediction result at the spot of the prediction target of the future passage spot is initialized. In step S702, a sequence number 1 is set to the variable a. The process proceeds from step S702 to step S703.

<<Step S703>>

X in step S703 is position information. X is in the form of a plurality of sequences, and stores the distance from the current spot to the prediction target spot.

Information for setting a prediction target spot of a future passage spot is initialized. In step S703, X[0] is set as the current spot. The process proceeds from step S703 to step S704.

<<Step S704>>

The distance from the current spot is stored in X[a] (X[a] = X[0] + K). A variable K is a distance between prediction target spots. Then, the process proceeds to step S705.

<<Step S705>>

The SOC prediction result at the spot X[a] is stored. This SOC prediction result is the SOC prediction result at the spot X[a] calculated by the SOC prediction result calculation unit 300 illustrated in FIG. 3.

The SOC prediction result at the spot X[a] is stored in a variable Y[a].

In step S705, the SOC prediction result Y[a] is stored in the SOC prediction result storage unit 311. Then, the process proceeds to step S705.

<<Step S706>>

The sequence number (variable a) for storing the prediction result is incremented. Then, the process proceeds to step S707.

<<Step S707>>

It is determined whether the variable a is greater than n. n is the total number of prediction target spots of the future passage spots. By determining whether the variable a is greater than n, it is confirmed whether the variable a is incremented and the calculation of the SOC prediction result at the prediction target spot has been completed.

When the calculation of the SOC prediction results for all the prediction target spots is not completed, the process returns to step S704, and the processes from step S704 to step S706 are repeated.

When it is determined in step S707 that the calculation of all the SOC prediction results has been completed, the process proceeds to step S708.

<<Step S708>>

It is determined whether the variable b is greater than 0. The variable b in step S708 is a sequence number for storing the SOC actual measurement result in the SOC actual measurement result storage unit 312 for comparison with the SOC prediction result stored in the SOC prediction result storage unit 311 illustrated in FIG. 3.

In a case where the initialization of the variable b is not completed in step S708, the process proceeds to step S709 to perform the initialization, and the process proceeds to step S710.

When it is determined in step S708 that the initialization is completed, the process also proceeds to step S710.

<<Step S709>>

In step S709, the sequence number b for storing the SOC actual measurement result is initialized (b = 1).

«Step S710»

In step S710, it is determined whether the current spot is the spot X[b]. X is the same value as in step S703, and stores the distance between the current spot and the prediction target spot.

When the vehicle moves while the flowchart is sequentially executed, the vehicle moves to the prediction target spot. At this time, in order to store the SOC actual measurement result when passing through the prediction target spot, whether the current spot has reached the prediction target spot is confirmed in step S710.

When it is not the storage spot of the SOC actual measurement result, step S711 is skipped, and the process proceeds to step S713. When it is the storage spot of the SOC actual measurement result, the process proceeds to step S711.

«Step S711»

When it is determined in step S710 to be the storage spot of the SOC actual measurement result, the SOC actual measurement result at the spot X[b] is stored in the variable Z[b]. Then, the process proceeds to step S712.

«Step S712»

When the storage of the SOC actual measurement result in the variable Z is completed in step S711, the value of the variable b is incremented so that the SOC actual measurement result is stored at the next prediction target spot in step S712. Then, the process proceeds to step S713.

«Step S713»

In step S713, it is determined whether the current spot is the SOC correction value calculation spot.

When it is not the SOC correction value calculation spot, the subsequent steps are skipped, and the process ends.

When it is determined in step S713 to be the SOC correction value calculation spot, the process proceeds to step S714, and the correction value calculation step of the SOC prediction result is performed.

«Step S714»

In step S714, the SOC prediction result comparison unit 313 sets the number d for comparison of the SOC prediction results stored in the SOC prediction result storage unit S311 with the SOC actual measurement results stored in the SOC actual measurement result storage unit S312. The number d is a variable, and is a value of how many times of comparison between the SOC prediction results and the SOC actual measurement results are performed. A variable c is a counter value at the time of performing comparison between the SOC prediction results and the SOC actual measurement results with the variable d.

Here, the value of the variable d is 1 or more, and the maximum value is set to be less than the variable b.

When the correction is performed on the basis of the latest SOC actual measurement result, the value of the variable b minus 1 is assigned to the variable d. The process proceeds from step S714 to step S715.

<<Step S715>>

Step S715 is a step of comparing the SOC prediction result and the SOC actual measurement result by the SOC prediction result comparison unit 313.

The SOC prediction result stored in the variable Y[c] in step S705 is subtracted from the SOC actual measurement result stored in Z[c] in step S711, and the result is stored in the variable G[c] indicating the SOC prediction error. Then, the process proceeds to step S716.

<<Step S716>>

In step S716, 1 is subtracted from the value of the variable c, and the reference destination of the sequence storing the SOC prediction results and the SOC actual measurement results to be compared is changed. Then, the process proceeds to step S717.

<<Step S717>>

In step S717, it is determined whether the variable C is 0, and it is determined whether the processing of the SOC prediction result comparison unit 313 is completed.

When the processing of the SOC prediction result comparison unit 313 is not completed, the processing proceeds to step S715, and the comparison processing is repeated.

When the processing of the SOC prediction result comparison unit 313 is completed, the processing proceeds to step S718.

«Step S718»

Step S718 is a step of calculating the SOC prediction result correction value by the SOC prediction result correction value calculation unit 314.

As preprocessing for calculating the SOC prediction result correction value, an average value G_Ave of each prediction error at the prediction target spot calculated from the plurality of SOC prediction results and the SOC actual measurement result illustrated in FIGS. 9 to 13 is calculated by the following equation (3.4).

$$\text{G\_Ave} = (\text{G[d]} + \text{G[d-1]} \dots + \text{G[1]})/\text{d} \dots (3.4)$$

Then, the process proceeds to step S719.

«Step S719»

In step S719, an SOC prediction result correction value is determined.

Here, the average value G_Ave of the prediction errors calculated in step S718 is used as the SOC prediction result correction value. A variable H is a correction value used in common for the SOC prediction result of the prediction target spot at the future passage spot.

When the SOC prediction result correction value is provided for each prediction target spot, the SOC prediction result correction value corresponding to each prediction target spot is stored with the variable H as a sequence. Then, the process proceeds to step S720.

<<Step S720>>

In step S720, in order to correct the SOC prediction result with the SOC prediction result correction value and acquire the corrected SOC prediction result, the position of the sequence to be corrected of the sequence of the SOC prediction results stored in the variable Y is set. A variable e is a sequence number of a head of a target for obtaining the corrected SOC prediction result. Since the current spot is a spot of the variable b minus 1, the variable b is assigned to the variable e. Then, the process proceeds to step S721.

«Step S721»

In step S721, at the current spot, the SOC prediction result is calculated, and each SOC prediction result at the spot that has not passed yet is corrected by the SOC prediction result correction value calculated in step S719, and the corrected SOC prediction result is output.

The correction method here is a method of simply adding the correction value calculated in step S719.

The corrected SOC prediction result Y_hos[e] is obtained by adding the SOC prediction result correction value H calculated in step S719 to the SOC prediction result Y[e] calculated in step S705.

The corrected SOC prediction result Y_hos is an output of the SOC prediction result correction unit 310 in FIG. 3, and is used for the control. Then, the process proceeds to step S722.

<<Step S722>>

In step S722, the value of the variable e is incremented by 1, and the reference position for calculating the corrected SOC prediction result is changed. Then, the process proceeds to step S723.

<<Step S723>>

In step S723, it is determined whether the calculation of the corrected SOC prediction result has been completed up to the last sequence.

That is, it is determined whether the variable e is larger than n, and when it is determined that the variable e is larger than n and the calculation of the corrected SOC prediction result has been completed up to the last sequence, the process proceeds to step S724.

In step S723, when the variable e is less than or equal to and the calculation of the corrected SOC prediction result is not completed, the processing proceeds to step S721, and the calculation processing of the corrected SOC prediction result is repeatedly executed.

«Step S724»

Step S724 is post-processing after completion of correction of a series of SOC prediction results.

When the subsequent calculation of the SOC prediction result is performed, the value of the variable b is set to 1 in order to align the comparison target between the sequence for storing the SOC prediction results and the sequence for storing the SOC actual measurement results. Then, the processing ends.

As described above, according to the first embodiment of the present invention, it is possible to provide the SOC prediction system 200 that can improve the accuracy of the energy consumption estimation result by comparing the actually measured energy consumption value and the energy consumption prediction value with respect to the energy consumption prediction value obtained by comparing the past state of charge of the own vehicle with the energy consumption estimation parameter after traveling a certain section, and correcting the prediction result with the correction value calculated on the basis of the deviation when there is a deviation between the energy consumption prediction value and the actual energy consumption value. Furthermore, it is possible to provide the SOC prediction system 200 that can perform an accurate planned operation by improving the accuracy of the energy consumption estimation result.

(Second Embodiment)

In the first embodiment described above, calculation is performed for the reference vehicle speed for solving the horizontal energy on the basis of the past travel history of the own vehicle, the limit vehicle speed acquired from the external information or the navigation information, and the like.

The first embodiment describes the configuration in the system of the vehicle in which the vehicle speed information is not acquired offline from the external network, but a method of acquiring the reference vehicle speed illustrated in FIG. 3 by connecting to the external network of the own vehicle is also conceivable.

In the second embodiment, for example, a plurality of vehicles connected to a wireless network 208 is connected to the information center 216 illustrated in FIG. 2, and speed information of a plurality of other vehicles is accumulated on the server side. The SOC prediction system 200 according to the second embodiment of the present invention uses, as an input of a reference vehicle speed for solving horizontal energy, an average speed or the like of the other vehicles having traveled in the prediction target section in the past.

In addition to the average vehicle speed of the other vehicles, in a case where the additional energy consumption prediction parameter information such as the weather condition and the road surface resistance can be acquired at the same time with respect to the network, the parameters such as the air density, the wind speed, the amount of air resistance

## EP 4 491 446 A1

that changes depending on the wind direction, and the traveling resistance caused by the roughness of the road surface at the time of releasing the horizontal energy become closer to the actual ones, and the accuracy of the SOC prediction result is improved accordingly.

According to the second embodiment, the similar effect to that of the first embodiment can be obtained, and the accuracy of the SOC prediction result can be improved by acquiring information such as the average speed of other vehicles from the network to acquire more types of the energy consumption prediction parameters.

As described above, according to the present invention, in the SOC prediction system that performs the SOC prediction for the future passage spot of the own vehicle, the SOC prediction result calculated by solving the horizontal energy, the vertical energy, and the like is corrected using the correction value calculated by the error between the past SOC prediction results and the actual SOC prediction results.

According to this configuration, the SOC prediction error caused by the vehicle state, the road surface condition, the driver state, the battery deterioration state, and the like, which are not included in the SOC prediction result predicted from each energy consumption, can be included in the correction value, and the SOC prediction accuracy can be improved.

By increasing the SOC prediction accuracy, the scheduled engine control in the hybrid vehicle can be accurately executed, which leads to a reduction in fuel consumption.

Note that the present invention is not limited to the above-described embodiments, and includes various modifications. For example, the above-described embodiments have been described in detail for easy understanding of the present invention, and are not necessarily limited to those having all the described configurations.

Further, a part of the configuration of one embodiment can be replaced with the configuration of the other embodiment, and the configuration of the other embodiment can be added to the configuration of one embodiment.

In addition, it is possible to add, delete, and replace other configurations for a part of the configuration of each embodiment.

In addition, although a block diagram and a flowchart are used to describe the present invention, each function and each step of the drawings used for the description may be realized by either software or hardware, or may be partially realized by any one.

In addition, all the blocks in a block diagram may be included in the same control device, or blocks may be respectively arranged in different control devices and configured through communication between the control devices.

Reference Signs List

| | |
|---|---|
| 200 | SOC prediction system |
| 201 | microcomputer |
| 202 | Random Access Memory |
| 203 | Read Only Memory |
| 204 | non-volatile ROM (EEPROM) |
| 205 | camera sensor |
| 206 | vehicle speed sensor |
| 207 | GPS sensor |
| 208 | network receiver |
| 209 | battery |
| 210 | battery control unit |
| 211 | motor |
| 212 | motor control unit |
| 213 | accelerator pedal sensor |
| 214 | engine control module |
| 215 | engine |
| 216 | information center |
| 300 | SOC prediction result calculation unit |
| 301 | vertical energy calculation unit |
| 302 | prediction parameter correction unit |
| 303 | horizontal energy calculation unit |
| 304 | electric load energy calculation unit |
| 305 | travel time calculation unit |
| 306 | total energy consumption calculation unit |
| 307 | SOC prediction result output unit |
| 310 | SOC prediction result correction unit |
| 311 | SOC prediction result storage unit |

14

312    SOC actual measurement result storage unit
313    SOC prediction result comparison unit
314    SOC prediction result correction value calculation unit
315    SOC prediction correction result output unit

**Claims**

1.  An SOC prediction system that predicts energy consumption required for traveling and predicts a future state of charge of a battery of an own vehicle, the SOC prediction system comprising:

    a state of charge prediction result calculation unit that calculates the energy consumption based on an energy consumption prediction parameter and predicts the future state of charge of the battery of the own vehicle; and an SOC prediction result correction unit that compares a state of charge prediction result output from the state of charge prediction result calculation unit with a state of charge actual measurement result of the battery measured after actual travel by the own vehicle, calculates an error, corrects the state of charge prediction result based on the error, and outputs a corrected result as an SOC prediction result.

2.  The SOC prediction system according to claim 1, wherein

    the SOC prediction result correction unit includes
    an SOC prediction result storage unit that stores the state of charge prediction result output from the state of charge prediction result calculation unit,
    an SOC actual measurement result storage unit that stores a state of charge actual measurement result of the battery measured after actual travel by the own vehicle,
    an SOC prediction result comparison unit that compares the state of charge prediction result stored in the SOC prediction result storage unit with the state of charge actual measurement result stored in the SOC actual measurement result storage unit and calculates the error,
    an SOC prediction result correction value calculation unit that calculates a correction value of the state of charge prediction result based on the error calculated by the SOC prediction result comparison unit, and
    an SOC prediction correction result output unit that corrects the state of charge prediction result based on the correction value calculated by the SOC prediction result correction value calculation unit and outputs a corrected result.

3.  The SOC prediction system according to claim 2, wherein the SOC prediction result comparison unit of the SOC prediction result correction unit compares the state of charge prediction result with the state of charge actual measurement result at one of a timing after a lapse of a predetermined time from a time at which the future state of charge of the battery is predicted by the state of charge prediction result calculation unit and a timing after traveling of a predetermined distance from a spot at which the future state of charge of the battery is predicted.

4.  The SOC prediction system according to claim 3, wherein a spot where the state of charge prediction result and the state of charge actual measurement result are to be compared is any one or more spots within a range of spots where the state of charge prediction result and the state of charge actual measurement result can be compared.

5.  The SOC prediction system according to claim 4, wherein a spot where the state of charge prediction result and the state of charge actual measurement result are to be compared is a spot after traveling of the predetermined distance.

6.  The SOC prediction system according to claim 4, wherein

    a spot where the state of charge prediction result and the state of charge actual measurement result are to be compared is a spot after traveling of the predetermined distance and a plurality of spots before traveling of the predetermined distance,
    the SOC prediction result comparison unit calculates a plurality of errors by comparing the state of charge prediction results at the spot after traveling of the predetermined distance and the plurality of spots before traveling of the predetermined distance with the state of charge actual measurement results at the spot after traveling of the predetermined distance and the plurality of spots before traveling of the predetermined distance, and
    the SOC prediction result correction value calculation unit calculates an average value of the plurality of errors calculated by the SOC prediction result comparison unit, and calculates a correction value of the state of charge prediction result based on the calculated average value.

7. The SOC prediction system according to claim 5, wherein

the SOC prediction result comparison unit calculates an error by comparing the state of charge prediction result at the spot after traveling of the predetermined distance with the state of charge actual measurement result at the spot after traveling of the predetermined distance, and
the SOC prediction result correction value calculation unit calculates a correction value of the state of charge prediction result by weighting the error calculated by the SOC prediction result comparison unit such that a correction amount increases as a distance from the spot after traveling of the predetermined distance increases or as time elapses from the spot after traveling of the predetermined distance.

8. The SOC prediction system according to claim 2, wherein the state of charge prediction result calculation unit is connected to an information center through a wireless network, and the energy consumption prediction parameter is received from the information center.

# FIG. 1

ALTITUDE    m

500m AHEAD: SOC65%
1km AHEAD: SOC55%
2km AHEAD: SOC40%

(a) COMPULSIVE POWER GENERATION SECTION

(b) REGENERATIVE CHARGING NOT POSSIBLE

0

SOC LEVEL    %

WITH SOC PREDICTIVE CONTROL

WITHOUT SOC PREDICTIVE CONTROL

POWER GENERATION START THRESHOLD

COMPULSIVE POWER GENERATION THRESHOLD

ENGINE SPEED
(WITH SOC PREDICTIVE CONTROL)    rpm

PREDICT FLAT BATTERY AND EXECUTE POWER GENERATION BY ENGINE BEFOREHAND REGARDLESS OF POWER GENERATION START THRESHOLD

BEST FUEL EFFICIENCY ENGINE OPERATING POINT

0

ENGINE SPEED
(WITHOUT SOC PREDICTIVE CONTROL)    rpm

ENGINE ROTATES AT HIGH SPEED FOR COMPULSIVE POWER GENERATION DUE TO FLAT BATTERY

BEST FUEL EFFICIENCY ENGINE OPERATING POINT

0

LATERAL AXIS: TIME t

# FIG. 2

INFORMATION CENTER

216

208

207

201

200

202

205

204

CPU    RAM

EEPROM    ROM

214

212

203

206

215

211   210   209

213

# FIG. 3

200

SOC PREDICTION RESULT CALCULATION UNIT

301

302

GRADIENT INFORMATION

REFERENCE VEHICLE SPEED

OWN VEHICLE SPEED

PREDICTION PARAMETER CORRECTION UNIT

VERTICAL ENERGY CALCULATION UNIT

HORIZONTAL ENERGY CALCULATION UNIT

303

304

A/C SWITCH

HEADLIGHT SWITCH

ELECTRIC LOAD ENERGY CALCULATION UNIT

SOC PREDICTION TARGET SPOT DISTANCE

ESTIMATED TIME OF ARRIVAL

TRAVEL TIME CALCULATION UNIT

SOC ACTUAL MEASUREMENT VALUE

TOTAL ENERGY CONSUMPTION CALCULATION UNIT

SOC PREDICTION RESULT OUTPUT UNIT

300

310

315

SOC PREDICTION RESULT CORRECTION UNIT

PREDICTION RESULT 0

SOC PREDICTION CORRECTION RESULT OUTPUT UNIT

SOC PREDICTION RESULT

311

SOC PREDICTION RESULT STORAGE UNIT

314

SOC PREDICTION RESULT COMPARISON UNIT

SOC PREDICTION RESULT CORRECTION VALUE CALCULATION UNIT

SOC ACTUAL MEASUREMENT RESULT STORAGE UNIT

313

305

306

307

312

18

## FIG. 4

| TRAVEL DISTANCE [m] | 0 | 200 | 400 | 600 | 800 | 1000 | 1200 | 1400 | 1600 | 1800 | 2000 | 2200 | 2400 | 2600 | 2800 | 3000 | 3200 | 3400 | 3600 | 3800 | 4000 |
|---|---|---|---|---|---|---|---|---|---|---|---|---|---|---|---|---|---|---|---|---|---|
| SOC PREDICTION RESULT [%] | 70 | 72 | 71 | 69 | 66 | 63 | 60 | 57 | 58 | 56 | 55 | 52 | 54 | 54 | 52 | 49 | 48 | 46 | 43 | 40 | 40 |
| SOC ACTUAL MEASUREMENT [%] | 69 | 71 | 70 | 66 | 63 | 62 | 60 | 54 | 55 | 53 | 54 | 49 | 53 | 53 | 50 | 46 | 46 | 43 | 40 | 37 | 38 |
| CORRECTED SOC PREDICTION RESULT [%] | 70 | 72 | 71 | 69 | 66 | 62 | 59 | 56 | 57 | 55 | 54 | 51 | 53 | 53 | 51 | 46 | 45 | 43 | 40 | 37 | 38 |

# FIG. 5

| | X00 | X01 | X02 | X03 | X04 | X05 |
|---|---|---|---|---|---|---|
| ① SOC PREDICTION RESULT [%] (OUTPUT FROM SOC PREDICTION RESULT STORAGE UNIT 311) | 70 | 72 | 71 | 69 | 66 | 63 |
| ② SOC ACTUAL MEASUREMENT RESULT [%] (OUTPUT FROM SOC ACTUAL MEASUREMENT RESULT STORAGE UNIT 312) | 70 | 71 | 70 | 66 | 63 | 62 |
| ③ SOC ACTUAL MEASUREMENT RESULT [%] – SOC PREDICTION RESULT [%] (PROCESSING OF SOC PREDICTION RESULT COMPARISON UNIT 313) | 0 | -1 | -1 | -3 | -3 | -1 |
| ④ SOC PREDICTION RESULT CORRECTION VALUE [%] (OUTPUT FROM SOC PREDICTION RESULT CORRECTION VALUE CALCULATION UNIT 314) | 0 | 0 | 0 | 0 | 0 | 0 |
| ⑤ CORRECTED SOC PREDICTION RESULT [%] (OUTPUT FROM SOC PREDICTION CORRECTION RESULT OUTPUT UNIT 315) | 70 | 72 | 71 | 69 | 66 | 63 |
| ⑥ SOC ACTUAL MEASUREMENT [%] – CORRECTED SOC PREDICTION RESULT [%] (ERROR AFTER SOC PREDICTION RESULT CORRECTION) | 0 | -1 | -1 | -3 | -3 | -1 |

## FIG. 6

| | X03 | X04 | X05 | X06 | X07 | X08 | X09 | X10 |
|---|---|---|---|---|---|---|---|---|
| ① SOC PREDICTION RESULT [%] (OUTPUT FROM SOC PREDICTION RESULT STORAGE UNIT 311) | 69 | 66 | 63 | 60 | 57 | 58 | 56 | 55 |
| ② SOC ACTUAL MEASUREMENT RESULT [%] (OUTPUT FROM SOC ACTUAL MEASUREMENT RESULT STORAGE UNIT 312) | 66 | 63 | 62 | 60 | 54 | 55 | 53 | 54 |
| ③ SOC ACTUAL MEASUREMENT RESULT [%] – SOC PREDICTION RESULT [%] (PROCESSING OF SOC PREDICTION RESULT COMPARISON UNIT 313) | -3 | -3 | -1 | 0 | -3 | -3 | -3 | -1 |
| ④ SOC PREDICTION RESULT CORRECTION VALUE [%] (OUTPUT FROM SOC PREDICTION RESULT CORRECTION VALUE CALCULATION UNIT 314) | 0 | 0 | -1 | -1 | -1 | -1 | -1 | -1 |
| ⑤ CORRECTED SOC PREDICTION RESULT [%] (OUTPUT FROM SOC PREDICTION CORRECTION RESULT OUTPUT UNIT 315) | 69 | 66 | 62 | 59 | 56 | 57 | 55 | 54 |
| ⑥ SOC ACTUAL MEASUREMENT [%] – CORRECTED SOC PREDICTION RESULT [%] (ERROR AFTER SOC PREDICTION RESULT CORRECTION) | -3 | -3 | 0 | 1 | -2 | -2 | -2 | 0 |

-1

ERROR RATE AFTER CORRECTION ↑

EP 4 491 446 A1

EP 4 491 446 A1

## FIG. 7

| | X08 | X09 | X10 | X11 | X12 | X13 | X14 | X15 |
|---|---|---|---|---|---|---|---|---|
| ① SOC PREDICTION RESULT [%] (OUTPUT FROM SOC PREDICTION RESULT STORAGE UNIT 311) | 58 | 56 | 55 | 52 | 54 | 54 | 52 | 49 |
| ② SOC ACTUAL MEASUREMENT RESULT [%] (OUTPUT FROM SOC ACTUAL MEASUREMENT RESULT STORAGE UNIT 312) | 55 | 53 | 54 | 49 | 53 | 53 | 50 | 46 |
| ③ SOC ACTUAL MEASUREMENT RESULT [%] – SOC PREDICTION RESULT [%] (PROCESSING OF SOC PREDICTION RESULT COMPARISON UNIT 313) | -3 | -3 | -1 | -3 | -1 | -1 | -2 | -3 |
| ④ SOC PREDICTION RESULT CORRECTION VALUE [%] (OUTPUT FROM SOC PREDICTION RESULT CORRECTION VALUE CALCULATION UNIT 314) | -1 | -1 | -1 | -1 | -1 | -1 | -1 | -1 |
| ⑤ CORRECTED SOC PREDICTION RESULT [%] (OUTPUT FROM SOC PREDICTION CORRECTION RESULT OUTPUT UNIT 315) | 57 | 55 | 54 | 51 | 53 | 53 | 51 | 48 |
| ⑥ SOC ACTUAL MEASUREMENT [%] – CORRECTED SOC PREDICTION RESULT [%] (ERROR AFTER SOC PREDICTION RESULT CORRECTION) | -2 | -2 | 0 | -2 | 0 | 0 | -1 | -2 |

-1

ERROR RATE AFTER CORRECTION ↑

## FIG. 8

| | X13 | X14 | X15 | X16 | X17 | X18 | X19 | X20 | |
|---|---|---|---|---|---|---|---|---|---|
| ① SOC PREDICTION RESULT [%] (OUTPUT FROM SOC PREDICTION RESULT STORAGE UNIT 311) | 54 | 52 | 49 | 48 | 46 | 43 | 40 | 40 | |
| ② SOC ACTUAL MEASUREMENT RESULT [%] (OUTPUT FROM SOC ACTUAL MEASUREMENT RESULT STORAGE UNIT 312) | 53 | 50 | 46 | 46 | 43 | 40 | 37 | 38 | |
| ③ SOC ACTUAL MEASUREMENT RESULT [%] – SOC PREDICTION RESULT [%] (PROCESSING OF SOC PREDICTION RESULT COMPARISON UNIT 313) | -1 | -2 | -3 | -2 | -3 | -3 | -3 | -2 | |
| ④ SOC PREDICTION RESULT CORRECTION VALUE [%] (OUTPUT FROM SOC PREDICTION RESULT CORRECTION VALUE CALCULATION UNIT 314) | -1 | -1 | -3 | -3 | -3 | -3 | -3 | -3 | |
| ⑤ CORRECTED SOC PREDICTION RESULT [%] (OUTPUT FROM SOC PREDICTION CORRECTION RESULT OUTPUT UNIT 315) | 53 | 51 | 46 | 45 | 43 | 40 | 37 | 37 | |
| ⑥ SOC ACTUAL MEASUREMENT [%] – CORRECTED SOC PREDICTION RESULT [%] (ERROR AFTER SOC PREDICTION RESULT CORRECTION) | 0 | -1 | 0 | 1 | 0 | 0 | 0 | 1 | 0.4 |

ERROR RATE AFTER CORRECTION ↑

EP 4 491 446 A1

EP 4 491 446 A1

# FIG. 9

| TRAVEL DISTANCE [m] | 0 | 200 | 400 | 600 | 800 | 1000 | 1200 | 1400 | 1600 | 1800 | 2000 | 2200 | 2400 | 2600 | 2800 | 3000 | 3200 | 3400 | 3600 | 3800 | 4000 |
|---|---|---|---|---|---|---|---|---|---|---|---|---|---|---|---|---|---|---|---|---|---|
| SOC PREDICTION RESULT [%] | 70 | 72 | 71 | 69 | 66 | 63 | 60 | 57 | 58 | 56 | 55 | 52 | 54 | 54 | 52 | 49 | 48 | 46 | 43 | 40 | 40 |
| SOC ACTUAL MEASUREMENT [%] | 69 | 71 | 70 | 66 | 63 | 62 | 60 | 54 | 55 | 53 | 54 | 49 | 53 | 53 | 50 | 46 | 46 | 43 | 40 | 37 | 38 |
| CORRECTED SOC PREDICTION RESULT [%] | 70 | 72 | 71 | 69 | 66 | 60.7 | 57.7 | 54.7 | 55.7 | 53.7 | 52.7 | 49.7 | 51.7 | 51.7 | 49.7 | 47 | 46 | 44 | 41 | 38 | 37.3 |

## FIG. 10

| | X00 | X01 | X02 | X03 | X04 | X05 |
|---|---|---|---|---|---|---|
| ① SOC PREDICTION RESULT [%] (OUTPUT FROM SOC PREDICTION RESULT STORAGE UNIT 311) | 70 | 72 | 71 | 69 | 66 | 63 |
| ② SOC ACTUAL MEASUREMENT RESULT [%] (OUTPUT FROM SOC ACTUAL MEASUREMENT RESULT STORAGE UNIT 312) | 70 | 71 | 70 | 66 | 63 | 62 |
| ③ SOC ACTUAL MEASUREMENT RESULT [%] – SOC PREDICTION RESULT [%] (PROCESSING OF SOC PREDICTION RESULT COMPARISON UNIT 313) | 0 | -1 | -1 | -3 | -3 | -1 |
| ④ SOC PREDICTION RESULT CORRECTION VALUE [%] (OUTPUT FROM SOC PREDICTION RESULT CORRECTION VALUE CALCULATION UNIT 314) | 0 | 0 | 0 | 0 | 0 | 0 |
| ⑤ CORRECTED SOC PREDICTION RESULT [%] (OUTPUT FROM SOC PREDICTION CORRECTION RESULT OUTPUT UNIT 315) | 70 | 72 | 71 | 69 | 66 | 63 |
| ⑥ SOC ACTUAL MEASUREMENT [%] – CORRECTED SOC PREDICTION RESULT [%] (ERROR AFTER SOC PREDICTION RESULT CORRECTION) | 0 | -1 | -1 | -3 | -3 | -1 |

## FIG. 11

| | X03 | X04 | X05 | X06 | X07 | X08 | X09 | X10 | |
|---|---|---|---|---|---|---|---|---|---|
| ① SOC PREDICTION RESULT [%] (OUTPUT FROM SOC PREDICTION RESULT STORAGE UNIT 311) | 69 | 66 | 63 | 60 | 57 | 58 | 56 | 55 | |
| ② SOC ACTUAL MEASUREMENT RESULT [%] (OUTPUT FROM SOC ACTUAL MEASUREMENT RESULT STORAGE UNIT 312) | 66 | 63 | 62 | 60 | 54 | 55 | 53 | 54 | |
| ③ SOC ACTUAL MEASUREMENT RESULT [%] – SOC PREDICTION RESULT [%] (PROCESSING OF SOC PREDICTION RESULT COMPARISON UNIT 313) | -3 | -3 | -1 | 0 | -3 | -3 | -3 | -1 | |
| ④ SOC PREDICTION RESULT CORRECTION VALUE [%] (OUTPUT FROM SOC PREDICTION RESULT CORRECTION VALUE CALCULATION UNIT 314) | 0 | 0 | -2.3 | -2.3 | -2.3 | -2.3 | -2.3 | -2.3 | |
| ⑤ CORRECTED SOC PREDICTION RESULT [%] (OUTPUT FROM SOC PREDICTION CORRECTION RESULT OUTPUT UNIT 315) | 69 | 66 | 60.7 | 57.7 | 54.7 | 55.7 | 53.7 | 52.7 | |
| ⑥ SOC ACTUAL MEASUREMENT [%] – CORRECTED SOC PREDICTION RESULT [%] (ERROR AFTER SOC PREDICTION RESULT CORRECTION) | -3 | -3 | 1.33 | 2.33 | -0.7 | -0.7 | -0.7 | 1.33 | 0.33 |

ERROR RATE AFTER CORRECTION ↑

## FIG. 12

|  | X08 | X09 | X10 | X11 | X12 | X13 | X14 | X15 |
|---|---|---|---|---|---|---|---|---|
| ① SOC PREDICTION RESULT [%] (OUTPUT FROM SOC PREDICTION RESULT STORAGE UNIT 311) | 58 | 56 | 55 | 52 | 54 | 54 | 52 | 49 |
| ② SOC ACTUAL MEASUREMENT RESULT [%] (OUTPUT FROM SOC ACTUAL MEASUREMENT RESULT STORAGE UNIT 312) | 55 | 53 | 54 | 49 | 53 | 53 | 50 | 46 |
| ③ SOC ACTUAL MEASUREMENT RESULT [%] − SOC PREDICTION RESULT [%] (PROCESSING OF SOC PREDICTION RESULT COMPARISON UNIT 313) | -3 | -3 | -1 | -3 | -1 | -1 | -2 | -3 |
| ④ SOC PREDICTION RESULT CORRECTION VALUE [%] (OUTPUT FROM SOC PREDICTION RESULT CORRECTION VALUE CALCULATION UNIT 314) | -2.3 | -2.3 | -2.3 | -2.3 | -2.3 | -2.3 | -2.3 | -2.3 |
| ⑤ CORRECTED SOC PREDICTION RESULT [%] (OUTPUT FROM SOC PREDICTION CORRECTION RESULT OUTPUT UNIT 315) | 55.7 | 53.7 | 52.7 | 49.7 | 51.7 | 51.7 | 49.7 | 46.7 |
| ⑥ SOC ACTUAL MEASUREMENT [%] − CORRECTED SOC PREDICTION RESULT [%] (ERROR AFTER SOC PREDICTION RESULT CORRECTION) | -0.7 | -0.7 | 1.33 | -0.7 | 1.33 | 1.33 | 0.33 | -0.7 |

0.33

ERROR RATE AFTER CORRECTION ↑

EP 4 491 446 A1

## FIG. 13

| | X13 | X14 | X15 | X16 | X17 | X18 | X19 | X20 |
|---|---|---|---|---|---|---|---|---|
| ① SOC PREDICTION RESULT [%] (OUTPUT FROM SOC PREDICTION RESULT STORAGE UNIT 311) | 54 | 52 | 49 | 48 | 46 | 43 | 40 | 40 |
| ② SOC ACTUAL MEASUREMENT RESULT [%] (OUTPUT FROM SOC ACTUAL MEASUREMENT RESULT STORAGE UNIT 312) | 53 | 50 | 46 | 46 | 43 | 40 | 37 | 38 |
| ③ SOC ACTUAL MEASUREMENT RESULT [%] – SOC PREDICTION RESULT [%] (PROCESSING OF SOC PREDICTION RESULT COMPARISON UNIT 313) | -1 | -2 | -3 | -2 | -3 | -3 | -3 | -2 |
| ④ SOC PREDICTION RESULT CORRECTION VALUE [%] (OUTPUT FROM SOC PREDICTION RESULT CORRECTION VALUE CALCULATION UNIT 314) | -2.3 | -2.3 | -2 | -2 | -2 | -2 | -2 | -2 |
| ⑤ CORRECTED SOC PREDICTION RESULT [%] (OUTPUT FROM SOC PREDICTION CORRECTION RESULT OUTPUT UNIT 315) | 51.7 | 49.7 | 47 | 46 | 44 | 41 | 38 | 38 |
| ⑥ SOC ACTUAL MEASUREMENT [%] – CORRECTED SOC PREDICTION RESULT [%] (ERROR AFTER SOC PREDICTION RESULT CORRECTION) | 1.33 | 0.33 | -1 | 0 | -1 | -1 | -1 | 0 |

-0.6

ERROR RATE AFTER CORRECTION ↑

EP 4 491 446 A1

## FIG. 14

| TRAVEL DISTANCE [m] | 0 | 200 | 400 | 600 | 800 | 1000 | 1200 | 1400 | 1600 | 1800 | 2000 | 2200 | 2400 | 2600 | 2800 | 3000 | 3200 | 3400 | 3600 | 3800 | 4000 |
|---|---|---|---|---|---|---|---|---|---|---|---|---|---|---|---|---|---|---|---|---|---|
| SOC PREDICTION RESULT [%] | 70 | 72 | 71 | 69 | 66 | 63 | 60 | 57 | 58 | 56 | 55 | 52 | 54 | 54 | 52 | 49 | 48 | 46 | 43 | 40 | 40 |
| SOC ACTUAL MEASUREMENT [%] | 69 | 71 | 70 | 66 | 62 | 61 | 59 | 53 | 53 | 51 | 52 | 47 | 50 | 50 | 47 | 43 | 42 | 39 | 36 | 33 | 33 |
| CORRECTED SOC PREDICTION RESULT [%] | 70 | 72 | 71 | 69 | 66 | 61 | 57.8 | 54.6 | 55.4 | 53.2 | 52 | 48.7 | 50.4 | 50.1 | 47.8 | 43 | 41.4 | 38.8 | 35.2 | 31.6 | 31 |

## FIG. 15

| | X00 | X01 | X02 | X03 | X04 | X05 |
|---|---|---|---|---|---|---|
| ① SOC PREDICTION RESULT [%] (OUTPUT FROM SOC PREDICTION RESULT STORAGE UNIT 311) | 70 | 72 | 71 | 69 | 66 | 63 |
| ② SOC ACTUAL MEASUREMENT RESULT [%] (OUTPUT FROM SOC ACTUAL MEASUREMENT RESULT STORAGE UNIT 312) | 69 | 71 | 70 | 66 | 62 | 61 |
| ③ SOC ACTUAL MEASUREMENT RESULT [%] − SOC PREDICTION RESULT [%] (PROCESSING OF SOC PREDICTION RESULT COMPARISON UNIT 313) | -1 | -1 | -1 | -3 | -4 | -2 |
| ④ SOC PREDICTION RESULT CORRECTION VALUE [%] (OUTPUT FROM SOC PREDICTION RESULT CORRECTION VALUE CALCULATION UNIT 314) | 0 | 0 | 0 | 0 | 0 | 0 |
| ⑤ CORRECTED SOC PREDICTION RESULT [%] (OUTPUT FROM SOC PREDICTION CORRECTION RESULT OUTPUT UNIT 315) | 70 | 72 | 71 | 69 | 66 | 63 |
| ⑥ SOC ACTUAL MEASUREMENT [%] − CORRECTED SOC PREDICTION RESULT [%] (ERROR AFTER SOC PREDICTION RESULT CORRECTION) | -1 | -1 | -1 | -3 | -4 | -2 |

## FIG. 16

| | X03 | X04 | X05 | X06 | X07 | X08 | X09 | X10 |
|---|---|---|---|---|---|---|---|---|
| ① SOC PREDICTION RESULT [%] (OUTPUT FROM SOC PREDICTION RESULT STORAGE UNIT 311) | 69 | 66 | 63 | 60 | 57 | 58 | 56 | 55 |
| ② SOC ACTUAL MEASUREMENT RESULT [%] (OUTPUT FROM SOC ACTUAL MEASUREMENT RESULT STORAGE UNIT 312) | 66 | 62 | 61 | 59 | 53 | 53 | 51 | 52 |
| ③ SOC ACTUAL MEASUREMENT RESULT [%] – SOC PREDICTION RESULT [%] (PROCESSING OF SOC PREDICTION RESULT COMPARISON UNIT 313) | -3 | -4 | -2 | -1 | -4 | -5 | -5 | -3 |
| ④ SOC PREDICTION RESULT CORRECTION VALUE [%] (OUTPUT FROM SOC PREDICTION RESULT CORRECTION VALUE CALCULATION UNIT 314) | 0 | 0 | -2 | -2.2 | -2.4 | -2.6 | -2.8 | -3 |
| ⑤ CORRECTED SOC PREDICTION RESULT [%] (OUTPUT FROM SOC PREDICTION CORRECTION RESULT OUTPUT UNIT 315) | 69 | 66 | 61 | 57.8 | 54.6 | 55.4 | 53.2 | 52 |
| ⑥ SOC ACTUAL MEASUREMENT [%] – CORRECTED SOC PREDICTION RESULT [%] (ERROR AFTER SOC PREDICTION RESULT CORRECTION) | -3 | -4 | 0 | 1.2 | -1.6 | -2.4 | -2.2 | 0 |

-1

ERROR RATE AFTER CORRECTION ↑

EP 4 491 446 A1

# FIG. 17

|  | X08 | X09 | X10 | X11 | X12 | X13 | X14 | X15 |  |
|---|---|---|---|---|---|---|---|---|---|
| ① SOC PREDICTION RESULT [%] (OUTPUT FROM SOC PREDICTION RESULT STORAGE UNIT 311) | 58 | 56 | 55 | 52 | 54 | 54 | 52 | 49 | |
| ② SOC ACTUAL MEASUREMENT RESULT [%] (OUTPUT FROM SOC ACTUAL MEASUREMENT RESULT STORAGE UNIT 312) | 53 | 51 | 52 | 47 | 50 | 50 | 47 | 43 | |
| ③ SOC ACTUAL MEASUREMENT RESULT [%] − SOC PREDICTION RESULT [%] (PROCESSING OF SOC PREDICTION RESULT COMPARISON UNIT 313) | -5 | -5 | -3 | -5 | -4 | -4 | -5 | -6 | |
| ④ SOC PREDICTION RESULT CORRECTION VALUE [%] (OUTPUT FROM SOC PREDICTION RESULT CORRECTION VALUE CALCULATION UNIT 314) | -2.6 | -2.8 | -3 | -3.3 | -3.6 | -3.9 | -4.2 | -4.5 | |
| ⑤ CORRECTED SOC PREDICTION RESULT [%] (OUTPUT FROM SOC PREDICTION CORRECTION RESULT OUTPUT UNIT 315) | 55.4 | 53.2 | 52 | 48.7 | 50.4 | 50.1 | 47.8 | 44.5 | |
| ⑥ SOC ACTUAL MEASUREMENT [%] − CORRECTED SOC PREDICTION RESULT [%] (ERROR AFTER SOC PREDICTION RESULT CORRECTION) | -2.4 | -2.2 | 0 | -1.7 | -0.4 | -0.1 | -0.8 | -1.5 | -0.9 |

ERROR RATE AFTER CORRECTION ↑

EP 4 491 446 A1

# FIG. 18

| | X13 | X14 | X15 | X16 | X17 | X18 | X19 | X20 |
|---|---|---|---|---|---|---|---|---|
| ① SOC PREDICTION RESULT [%] (OUTPUT FROM SOC PREDICTION RESULT STORAGE UNIT 311) | 54 | 52 | 49 | 48 | 46 | 43 | 40 | 40 |
| ② SOC ACTUAL MEASUREMENT RESULT [%] (OUTPUT FROM SOC ACTUAL MEASUREMENT RESULT STORAGE UNIT 312) | 50 | 47 | 43 | 42 | 39 | 36 | 33 | 33 |
| ③ SOC ACTUAL MEASUREMENT RESULT [%] – SOC PREDICTION RESULT [%] (PROCESSING OF SOC PREDICTION RESULT COMPARISON UNIT 313) | -4 | -5 | -6 | -6 | -7 | -7 | -7 | -7 |
| ④ SOC PREDICTION RESULT CORRECTION VALUE [%] (OUTPUT FROM SOC PREDICTION RESULT CORRECTION VALUE CALCULATION UNIT 314) | -3.9 | -4.2 | -6 | -6.6 | -7.2 | -7.8 | -8.4 | -9 |
| ⑤ CORRECTED SOC PREDICTION RESULT [%] (OUTPUT FROM SOC PREDICTION CORRECTION RESULT OUTPUT UNIT 315) | 50.1 | 47.8 | 43 | 41.4 | 38.8 | 35.2 | 31.6 | 31 |
| ⑥ SOC ACTUAL MEASUREMENT [%] – CORRECTED SOC PREDICTION RESULT [%] (ERROR AFTER SOC PREDICTION RESULT CORRECTION) | -0.1 | -0.8 | 0 | 0.6 | 0.2 | 0.8 | 1.4 | 2 |

ERROR RATE AFTER CORRECTION ↑

## FIG. 19

## INTERNATIONAL SEARCH REPORT

International application No.

**PCT/JP2022/009712**

**A. CLASSIFICATION OF SUBJECT MATTER**

**B60L 58/12**(2019.01)i
FI:  B60L58/12

According to International Patent Classification (IPC) or to both national classification and IPC

**B. FIELDS SEARCHED**

Minimum documentation searched (classification system followed by classification symbols)

B60L58/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2010-125868 A (DENSO CORP) 10 June 2010 (2010-06-10)<br>  paragraphs [0051]-[0076], [0101]-[0116], fig. 2 | 1-6, 8 |
| A | | 7 |
| A | JP 2007-50888 A (AISIN AW CO LTD) 01 March 2007 (2007-03-01)<br>  entire text, all drawings | 1-8 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 April 2022** | **17 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/009712**

| Patent document cited in search report | | | Publication date (day/month/year) | Patent family member(s) | Publication date (day/month/year) |
|---|---|---|---|---|---|
| JP | 2010-125868 | A | 10 June 2010 | US 2010/0131139 A1<br>paragraphs [0066]-[0096],<br>[0121]-[0135], fig. 2 | |
| JP | 2007-50888 | A | 01 March 2007 | (Family: none) | |

Form PCT/ISA/210 (patent family annex) (January 2015)